# EUROPEAN PATENT SPECIFICATION

(11) **EP 2 127 353 B1**
(45) Date of publication and mention of the grant of the patent: **21.09.2016**
(21) Application number: 07811098.8
(22) Date of filing: 06.08.2007
(51) Int. Cl.: H04M 19/04, H04M 1/725

(54) **METHOD FOR USING AN ALERT FILE BY CONVERTING THE ALERT FILE TO A LOWER COMPLEXITY FILE FORMAT AND RELATED ELECTRONIC DEVICE**
VERFAHREN ZUR VERWENDUNG EINER WARNDATEI DURCH UMSETZEN DER WARNDATEI IN EIN DATEIFORMAT NIEDRIGERER KOMPLEXITÄT UND DIESBEZÜGLICHE ELEKTRONISCHE EINRICHTUNG
PROCÉDÉ D'UTILISATION D'UN FICHIER D'ALERTE EN CONVERTISSANT LE FICHIER D'ALERTE EN UN FORMAT DE FICHIER DE COMPLEXITÉ INFÉRIEURE ET DISPOSITIF ÉLECTRONIQUE ASSOCIÉ

(30) Priority: 31.01.2007 US 700618
(43) Date of publication of application: 02.12.2009
(73) Proprietor: Sony Ericsson Mobile Communications AB, 221 88 Lund (SE)
(72) Inventor: ZAK, Robert A., Cary, NC 27513 (US)
(74) Representative: Wheatley, Alison Clare
(86) International application number: PCT/US2007/017451
(87) International publication number: WO 2008/094209

(56) References cited:
- EP-A- 1 213 720
- WO-A-01/54381
- WO-A-2004/025829
- US-A1- 2001 014 616
- US-A1- 2004 204 146
- US-A1- 2006 060 069

## Description

### BACKGROUND OF THE INVENTION

The present invention relates to signal processing technology, and, more particularly, to methods, electronic devices, and computer program products for generating an alert signal for an electronic device.

A user of an electronic device, such as a mobile phone, may wish to choose the sounds that are used for alerts, such as alarms and ringtones, from any supported audio format. For example, many mobile phone devices allow a user to choose a specific ringtone for each phone number stored in his/her phonebook. It may also be desirable to be able to mix in these alerts with other audio functions of the phone, such as voice calls or the playing of music or other audio files. For example, a user may be currently on a phone call and receive a second incoming call. If the alert audio is mixed with the voice audio, then the user may be able to tell who is calling without having to remove the phone from his/her ear to examine the caller identification/number, which may allow the user to avoid missing any of his/her current conversation.

Prior art examples are disclosed by documents US2006/0060069 and US2001/014616

Unfortunately, mixing two or more audio streams may result in a significant processing burden for a mobile phone device because music decoders often use large amounts of processor instruction cycles per second (MIPs) and memory. Moreover, the mixing of an audio alert signal with other audio signals, such as music or a voice conversation is not an available feature on many conventional mobile phones as these phones do not support real-time audio decoding for more than one audio stream at a time. Instead, these mobile phone devices substitute simple tones for the more complex audio alert selected by the user. These replacement tones are generally not unique to the individuals in a user's phone book so the user is not provided with his/her desired personalized sounds to identify a calling party.

### SUMMARY OF THE INVENTION

According to some embodiments of the present invention, a method of using an alert file on an electronic device as in claim 1 is described.

In other embodiments, the method further includes receiving a user selection of the alert file before determining if the audio format of the alert file is in the first category or the second category.

In still other embodiments, the electronic device is a mobile terminal.

In further embodiments of the present invention, an electronic device including an alert file manager as in claim 4 is described.

In still further embodiments, the alert file manager is further configured to receive a user selection of the alert file before determining if the audio format of the alert file is in the first category or the second category.

In still further embodiments, the electronic device is a mobile terminal.

### BRIEF DESCRIPTION OF THE DRAWINGS

Other features of the present invention will be more readily understood from the following detailed description of specific embodiments thereof when read in conjunction with the accompanying drawings, in which:
FIG. 1 is a block diagram that illustrates an electronic device/mobile terminal in accordance with some embodiments of the present invention;
FIG. 2 is a block diagram that illustrates an audio processor for use in the electronic device/mobile terminal of FIG. 1 in accordance with some embodiments of the present invention; and
FIGS. 3 and 4 are flow charts that illustrate operations for generating an alert based on processor loading in accordance with some embodiments of the present invention.

### DETAILED DESCRIPTION OF EMBODIMENTS

While the invention is susceptible to various modifications and alternative forms, specific embodiments thereof are shown by way of example in the drawings and will herein be described in detail. It should be understood, however, that there is no intent to limit the invention to the particular forms disclosed, but on the contrary, the invention is to cover all modifications, equivalents, and alternatives falling within the scope of the invention as defined by the claims. Like reference numbers signify like elements throughout the description of the figures.

As used herein, the singular forms "a," "an," and "the" are intended to include the plural forms as well, unless expressly stated otherwise. It should be further understood that the terms "comprises" and/or "comprising" when used in this specification is taken to specify the presence of stated features, integers, steps, operations, elements, and/or components, but does not preclude the presence or addition of one or more other features, integers, steps, operations, elements, components, and/or groups thereof. It will be understood that when an element is referred to as being "connected" or "coupled" to another element, it can be directly connected or coupled to the other element or intervening elements may be present. Furthermore, "connected" or "coupled" as used herein may include wirelessly connected or coupled. As used herein, the term "and/or" includes any and all combinations of one or more of the associated listed items.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

The present invention may be embodied as methods, electronic devices, and/or computer program products. Accordingly, the present invention may be embodied in hardware and/or in software (including firmware, resident software, micro-code, *etc.).* Furthermore, the present invention may take the form of a computer program product on a computer-usable or computer-readable storage medium having computer-usable or computer-readable program code embodied in the medium for use by or in connection with an instruction execution system. In the context of this document, a computer-usable or computer-readable medium may be any medium that can contain, store or transport the program for use by or in connection with the instruction execution system, apparatus, or device.

The computer-usable or computer-readable medium may be, for example but not limited to, an electronic, magnetic, optical, electromagnetic, infrared, or semiconductor system, apparatus, or device. More specific examples (a nonexhaustive list) of the computer-readable medium would include the following: a portable computer diskette, a random access memory (RAM), a read-only memory (ROM), an erasable programmable read-only memory (EPROM or Flash memory), and a compact disc read-only memory (CD-ROM).

As used herein, the term "mobile terminal" may include a satellite or cellular radiotelephone with or without a multi-line display; a Personal Communications System (PCS) terminal that may combine a cellular radiotelephone with data processing, facsimile and data communications capabilities; a PDA that can include a radiotelephone, pager, Internet/intranet access, Web browser, organizer, calendar and/or a global positioning system (GPS) receiver; and a conventional laptop and/or palmtop receiver or other appliance that includes a radiotelephone transceiver. Mobile terminals may also be referred to as "pervasive computing" devices.

For purposes of illustration, embodiments of the present invention are described herein in the context of a mobile terminal. It will be understood, however, that the present invention is not limited to such embodiments and may be embodied generally as an electronic device in which files are stored thereon for generation of alerts, such as, for example, ringtones, alarms, and the like.

Some embodiments of the present invention stem from a realization that files used to generate alerts in an electronic device, such as a mobile terminal, may be converted from a relatively complex format to a less complex format. This may reduce the load on a processor to play such files and, in some cases, may even allow the audio generated therefrom to be mixed with other audio. Thus, a user may be able to assign custom alerts to various parties or functions, such as an alarm function, and recognize the calling party of an incoming call or distinguish an alarm from an incoming call without interrupting another audio activity, such as listening to music or participating in another phone call.

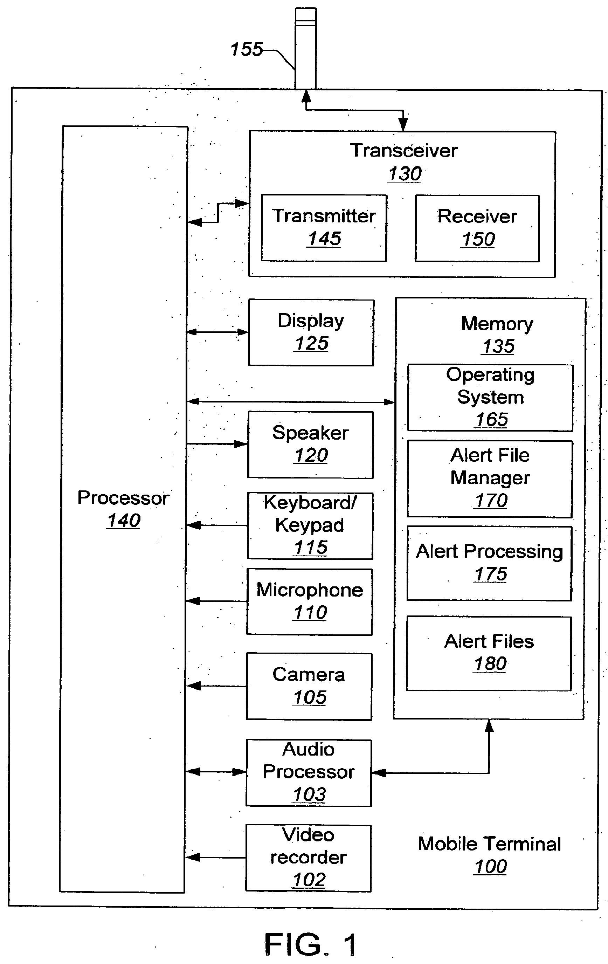

Referring now to FIG. 1, a mobile terminal 100 of FIG. 1, in accordance with some embodiments of the present invention, includes a video recorder 102, an audio processor 103, a camera 105, a microphone 110, a keyboard/keypad 115, a speaker 120, a display 125, a transceiver 130, and a memory 135 that communicate with a processor 140. The transceiver 130 comprises a transmitter circuit 145 and a receiver circuit 150, which respectively transmit outgoing radio frequency signals to base station transceivers and receive incoming radio frequency signals from the base station transceivers via an antenna 155. The radio frequency signals transmitted between the mobile terminal 100 and the base station transceivers may comprise both traffic and control signals (e.g., paging signals/messages for incoming calls), which are used to establish and maintain communication with another party or destination. The radio frequency signals may also comprise packet data information, such as, for example, cellular digital packet data (CDPD) information. In accordance with various embodiments of the present invention, the mobile terminal 100 may communicate with the base station transceivers using one or more cellular communication protocols such as, for example, Advanced Mobile Phone Service (AMPS), ANSI-136, Global Standard for Mobile (GSM) communication, General Packet Radio Service (GPRS), enhanced data rates for GSM evolution (EDGE), Integrated Digital Enhancement Network (iDEN), code division multiple access (CDMA), wideband-CDMA, CDMA2000, and/or Universal Mobile Telecommunications System (UMTS).

The foregoing components of the mobile terminal 100 may be included in many conventional mobile terminals and their functionality is generally known to those skilled in the art.

The processor 140 communicates with the memory 135 via an address/data bus. The processor 140 may be, for example, a commercially available or custom microprocessor. The memory 135 is representative of the one or more memory devices containing the software and data used to operate the mobile terminal 100 and to generate alerts so as to reduce processor loading in certain instances based on the operating configuration of the mobile terminal 100, in accordance with some embodiments of the present invention. The memory 135 may include, but is not limited to, the following types of devices: cache, ROM, PROM, EPROM, EEPROM, flash, SRAM, and DRAM.

As shown in FIG. 1, the memory 135 may contain four or more categories of software and/or data: an operating system 165, an alert file manager 170, an alert processing module 175, and alert files 180. The operating system 165 generally controls the operation of the mobile terminal 100. In particular, the operating system 165 may manage the mobile terminal's software and/or hardware resources and may coordinate execution of programs by the processor 140. The alert file manager 170 may be configured to determine if an alert file selected by a user, for example, is in a relatively high complexity audio format that may place a significant processing burden on the processor 140 and/or the audio processor 103. If so, then the alert manager 170 may convert the audio format of the alert file to another lower complexity audio format. The alert file may then be stored as part of alert files 180 with the converted audio format. Because the alert now has a less complex audio format, the processor 140 and/or the audio processor 103 may be able to mix the audio generated from the alert file with other audio signals, such as music and/or voice from a telephone call.

The alert processing module 175 may be configured to detect or receive an alert event and determine if there are multiple alert files 180 that are associated with the alert event. For example, a user may save a ringtone associated with a friend in both a high complexity audio format and a low complexity audio format in the alert files 180. Based on the particular operating configuration of the mobile terminal 100, the alert processing module 175 may select one of the two alert files to use to generate the alert, i.e., ringtone, when the friend calls. For example, if the user is wearing headphones, then the alert processing module 175 may select the high complexity audio format for the alert file as the alert may be played in stereo. However, if the mobile terminal is in a mono audio mode, then the alert processing module 175 may select the low complexity audio format for the alert file as the additional sound quality provided by the high complexity alert file format may not be realized when the mobile terminal is in a mono audio mode.

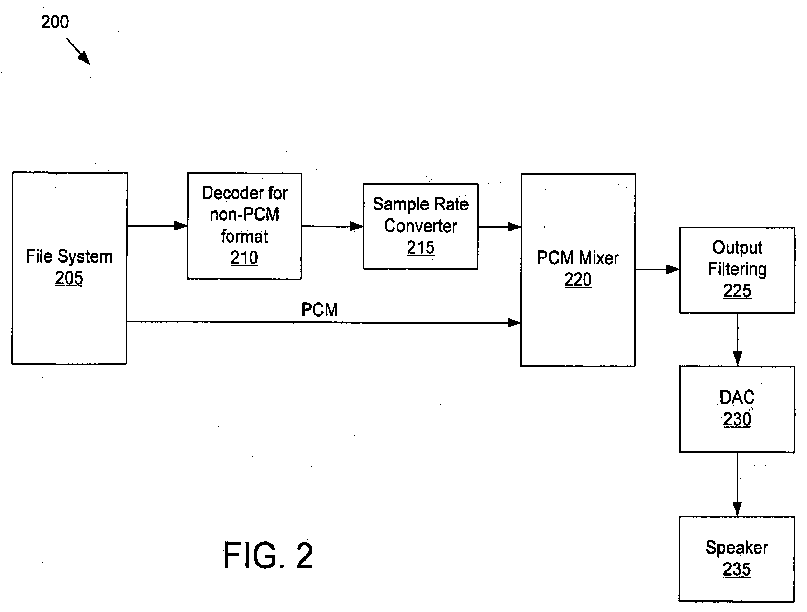

FIG. 2 is a block diagram that illustrates the audio processor 103 of FIG. 1 in more detail. The audio processor 200 includes a file system 205, decoder 210, sample rate converter 215, PCM mixer 220, output filtering module 225, digital-to-analog converter (DAC) 230, and speaker 235, which are configured as shown. The file system 205 contains alert files, such as the alert files 180 of FIG. 1, for generating alert sounds. The alert files may be in various file formats including "high" complexity file formats, such as MPEG Audio Layer Three format (MP3), Advanced Audio Coding format (AAC), High-Efficiency Advanced Audio Coding format (HE-AAC), and/or Windows Media Audio format (WMA) and "low" complexity file formats, such as Pulse Code Modulation (PCM) and/or Waveform Audio format (WAV). In general, audio files encoded in a high complexity file format place more of a processing burden on the audio processor 200 while files encoded in a low complexity file format place less of a processing burden on the audio processor 200.

In the example shown in FIG. 2, when an alert is to be played that is not in the PCM audio format, a decoder 210 converts the alert file to the PCM format and the sample rate converter 215 provides any required interpolation to match the PCM sampling rate supported by the audio processor 200. Because PCM files can consume relatively large amounts of memory, the PCM sampling rate used in the mobile terminal 100 may be based on the amount of free space available in the memory 135 and/or the audio quality desired by the user. For alerts associated with alert files encoded in the PCM format, the operations of the decoder 210 and the sample rate converter 215 are not needed. The PCM mixer 220 may mix the PCM alert with other audio, such as music or even voice from an active phone conversation or voice.mail. After any mixing is performed the output of the PCM mixer 220 is filtered at block 225 and then the digital-to-analog converter 230 converts the digital PCM stream to analog where it can be played through the speaker 235.

Although FIGS. 1 and 2 illustrate an exemplary software and hardware architecture that may be used to provide an electronic device/mobile phone it will be understood that the present invention is not limited to such a configuration, but is intended to encompass any configuration capable of carrying out the operations described herein.

Computer program code for carrying out operations of electronic devices/mobile terminals discussed above with respect to FIGS. 1 - 2 may be written in a high-level programming language, such as Java, C, and/or C++, for development convenience. In addition, computer program code for carrying out operations of embodiments of the present invention may also be written in other programming languages, such as, but not limited to, interpreted languages. Some modules or routines may be written in assembly language or even micro-code to enhance performance and/or memory usage. It will be further appreciated that the functionality of any or all of the program modules may also be implemented using discrete hardware components, one or more application specific integrated circuits (ASICs), or a programmed digital signal processor or microcontroller.

The present invention is described hereinafter with reference to flowchart and/or block diagram illustrations of methods, electronic devices/mobile terminals, and/or computer program products in accordance with some embodiments of the invention.

These flowchart and/or block diagrams further illustrate exemplary operations of generating an alert based on processor loading considerations, in accordance with some embodiments of the present invention. It will be understood that each block of the flowchart and/or block diagram illustrations, and combinations of blocks in the flowchart and/or block diagram illustrations, may be implemented by computer program instructions and/or hardware operations. These computer program instructions may be provided to a processor of a general purpose computer, a special purpose computer, or other programmable data processing apparatus to produce a machine, such that the instructions, which execute via the processor of the computer or other programmable data processing apparatus, create means for implementing the functions specified in the flowchart and/or block diagram block or blocks.

These computer program instructions may also be stored in a computer usable or computer-readable memory that may direct a computer or other programmable data processing apparatus to function in a particular manner, such that the instructions stored in the computer usable or computer-readable memory produce an article of manufacture including instructions that implement the function specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart and/or block diagram block or blocks.

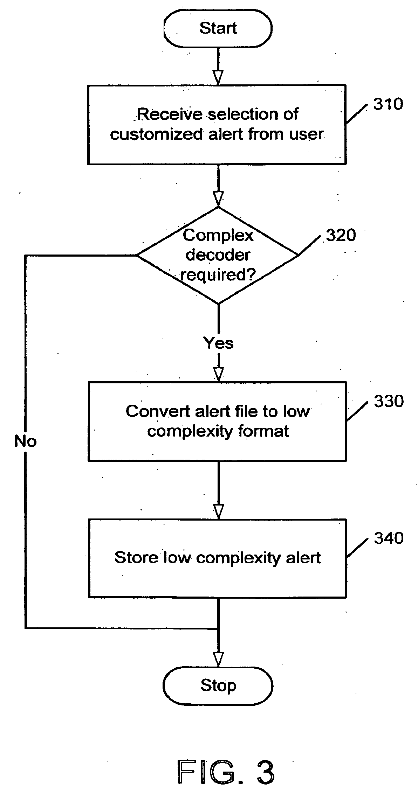

Referring now to FIG. 3 along with FIGS. 1 and 2, operations for storing an alert file on an electronic device, such as a mobile terminal, in accordance with some embodiments of the present invention, begin at block 310 where the alert file manager 170 receives a selection of a customized alert from a user. The alert file manager 170 determines if the alert has a file format that is in a first category of high complexity file formats, such as the examples listed above, or if the alert has a file format that is in a second category of low complexity file formats, e.g., the PCM format at block 320. In other words, is the complex decoder 210 and sample rate converter 215 of the audio processor 200 needed to process the alert. If the alert file has a high complexity audio format, then the alert file manager 170 converts the alert file to a low complexity format at block 330 using, for example, the decoder 210 of the audio processor 200. This operation at block 330 may be performed "offline," e.g., at a time other than when the alert is to be played. The alert file with the converted audio format may then be saved at block 340.

As mentioned above, the PCM audio format is relatively memory intensive. Thus, when deciding which alert files are to be converted to a low complexity audio format, such as PCM, the increase in the amount of memory used may be weighed against the reduced processor loading and power consumption. For example, in accordance with various embodiments of the present invention, an alert file may be saved in the alert files 180 in both a high complexity audio format and a low complexity audio format. Alternatively, the original alert file having the high complexity audio format may be deleted from the memory 135 of the mobile terminal 100 once the low complexity audio format version is saved. In some embodiments, the audio processor 103 of FIG. 2 may be configured to regenerate the high complexity audio format version of the alert when the user tried to upload or send it from the mobile terminal, for example.

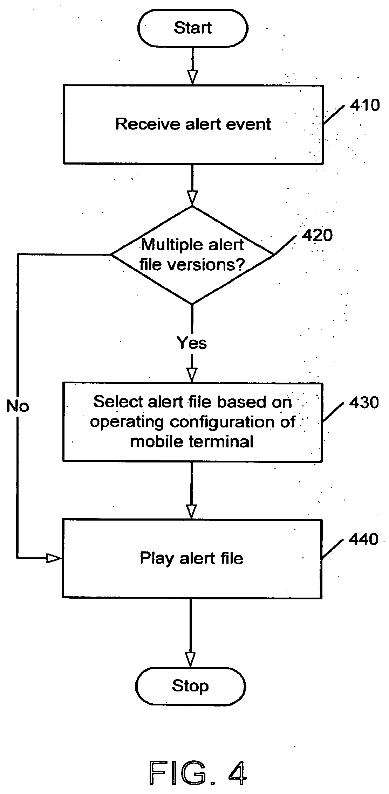

FIG. 4 illustrates operations for generating an alert on an electronic device, such as a mobile terminal, in accordance with some embodiments of the present invention. Operations begin at block 410 where the alert processing module 175 receives an alert event, such as, for example, an incoming call or an alarm. The alert processing module 175 determines at block 420 whether there are multiple alert file versions or formats in the alert files 180 for this alert. As discussed above, alert files may be in a variety of audio formats, including high complexity audio formats and low complexity audio formats, such as PCM. If multiple alert files exist for this particular alert, then the alert processing module 175 selects the alert file based on the operating configuration of the mobile terminal 100. In accordance with some embodiments of the present invention, the operating configuration may be based on an operating mode of the mobile terminal and/or a time duration of the alert.

For example, a high complexity audio format file may have been saved in the alert files 180 for the alert and a low complexity audio format file may have been saved in the alert files 180 for the alert as discussed above with respect to FIG. 3. In accordance with various embodiments of the present invention, if the operating mode of the mobile terminal 100 is a mono audio playback mode, then the alert processing module 175 may select the low complexity audio format alert file at block 430. If the operating mode of the mobile terminal 100 is a stereo audio playback mode, such as when the user is wearing headphones, then the alert processing module 175 may select the high complexity audio format alert file at block 430. If the time duration of the alert exceeds a time threshold, e.g., the alert is an alarm and is to be played indefinitely until the user turns it off, then the alert processing module 175 may select the low complexity audio format alert file at block 430 to reduce the load on the audio processor 200 and to reduce power consumption in the mobile terminal 100. If the time duration of the alert is less than a time threshold, then the alert processing module 175 may select the high complexity audio format alert file at block 430. For example, most ring signals for incoming calls play for no more than about 30 seconds before the network terminate the alert.

The flowcharts of FIGS. 3 and 4 illustrate the architecture, functionality, and operations of embodiments of methods, electronic devices, and/or computer program products for generating an alert based on processor loading. In this regard, each block represents a module, segment, or portion of code, which comprises one or more executable instructions for implementing the specified logical function(s). It should also be noted that in other implementations, the function(s) noted in the blocks may occur out of the order noted in FIGS. 3 and 4. For example, two blocks shown in succession may, in fact, be executed substantially concurrently or the blocks may sometimes be executed in the reverse order, depending on the functionality involved.

Some embodiments of the present invention may reduce the processing burden on processors that are used to play and/or mix audio streams by converting high complexity audio alert files to low complexity audio alert files. The low complexity audio alert files, such as PCM, need not be decoded and/or interpolated. As a result, an electronic device may be able to mix many audio alerts with other audio streams, such as music or voice. The reduced processor load may also reduce power consumption thereby extending battery life.

Many variations and modifications can be made to the embodiments without substantially departing from the principles of the present invention. All such variations and modifications are intended to be included herein within the scope of the present invention, as set forth in the following claims.

## Claims

1. A method of using an alert file on an electronic device, comprising:
determining if an audio format of the alert file is in a first category comprising at least one high complexity audio format or is in a second category comprising at least one low complexity audio format;
converting the audio format of the alert file to one of the at least one low complexity audio format based on an amount of free memory on the electronic device if the audio format of the alert file is in the first category;
saving the alert file with the converted audio format on the electronic device;
associating the alert file and the converted alert file with an alert event;
receiving the alert event;
selecting one of the alert file and the converted alert file based on an operating mode of the electronic device responsive to receiving the alert event; and
mixing audio generated from the selected one of the alert file and the converted alert file with other audio unrelated to the alert event.

2. The method of Claim 1, further comprising:
receiving a user selection of the alert file before determining if the audio format of the alert file is in the first category or the second category.

3. The method of Claim 1, wherein the electronic device is a mobile terminal.

4. An electronic device, comprising:
an alert file manager that is configured to determine if an audio format of the alert file is in a first category comprising at least one high complexity audio format or is in a second category comprising at least one low complexity audio format, to convert the audio format of the alert file to one of the at least one low complexity audio formats based on an amount of free memory on the electronic device if the audio format of the alert file is in the first category, and to save the alert file with the converted audio format on the electronic device, to associate the alert file and the converted alert file with an alert event, to receive the alert event, to select one of the alert file and the converted alert file based on an operating mode of the electronic device responsive to receiving the alert event, and to mix audio generated from the selected one of the alert file and the converter alert file with other audio unrelated to the alert event.

5. The electronic device of Claim 4, wherein the alert file manager is further configured to receive a user selection of the alert file before determining if the audio format of the alert file is in the first category or the second category.

6. The electronic device of Claim 4, wherein the electronic device is a mobile terminal.

## Patentansprüche

1. Verfahren zur Verwendung einer Alert-Datei auf einer elektronischen Vorrichtung, umfassend:
Bestimmen, ob sich ein Audioformat der Alert-Datei in einer ersten Kategorie, umfassend mindestens ein Audioformat hoher Komplexität, oder in einer zweiten Kategorie, umfassend mindestens ein Audioformat niedriger Komplexität, befindet;
Umwandeln des Audioformats der Alert-Datei in eines des mindestens einen Audioformats mit niedriger Komplexität auf der Grundlage einer Menge an freiem Speicher auf der elektronischen Vorrichtung, falls sich das Audioformat der Alert-Datei in der ersten Kategorie befindet;
Speichern der Alert-Datei mit dem umgewandelten Audioformat auf der elektronischen Vorrichtung;
Verknüpfen der Alert-Datei und der umgewandelten Alert-Datei mit einem Alert-Ereignis;
Empfangen des Alert-Ereignisses;
Auswählen entweder der Alert-Datei oder der umgewandelten Alert-Datei auf der Grundlage eines Betriebsmodus der elektronischen Vorrichtung, der auf Empfangen des Alert-Ereignisses reagiert; und
Mischen von Audio, das von der ausgewählten Alert-Datei oder der umgewandelten Alert-Datei erzeugt wird, mit anderem Audio, das nicht in Beziehung zum Alert-Ereignis steht.

2. Verfahren nach Anspruch 1, weiterhin umfassend:
Empfangen einer Benutzerauswahl der Alert-Datei vor dem Bestimmen, ob sich das Audioformat der Alert-Datei in der ersten Kategorie oder der zweiten Kategorie befindet.

3. Verfahren nach Anspruch 1, wobei die elektronische Vorrichtung ein mobiles Endgerät ist.

4. Elektronische Vorrichtung, umfassend:
einen Alert-Dateimanager, der dazu konfiguriert ist zu bestimmen, ob sich ein Audioformat der Alert-Datei in einer ersten Kategorie, umfassend mindestens ein Audioformat hoher Komplexität, oder in einer zweiten Kategorie, umfassend mindestens ein Audioformat niedriger Komplexität, befindet, das Audioformat der Alert-Datei in eines des mindestens einen Audioformats mit niedriger Komplexität auf der Grundlage einer Menge an freiem Speicher auf der elektronischen Vorrichtung umzuwandeln, falls sich das Audioformat der Alert-Datei in der ersten Kategorie befindet, und die Alert-Datei mit dem umgewandelten Audioformat auf der elektronischen Vorrichtung zu speichern und die Alert-Datei und die umgewandelte Alert-Datei mit einem Alert-Ereignis zu verknüpfen, das Alert-Ereignis zu empfangen, entweder die Alert-Datei oder die umgewandelte Alert-Datei auf der Grundlage eines Betriebsmodus der elektronischen Vorrichtung, der auf Empfangen des Alert-Ereignisses reagiert, auszuwählen und Audio, das von der ausgewählten Alert-Datei oder der umgewandelten Alert-Datei erzeugt wird, mit anderem Audio, das nicht in Beziehung zum Alert-Ereignis steht, zu mischen.

5. Elektronische Vorrichtung nach Anspruch 4, wobei der Alert-Dateimanager weiterhin dazu konfiguriert ist, eine Benutzerauswahl der Alert-Datei vor dem Bestimmen, ob sich das Audioformat der Alert-Datei in der ersten Kategorie oder der zweiten Kategorie befindet, zu empfangen.

6. Elektronische Vorrichtung nach Anspruch 4, wobei die elektronische Vorrichtung ein mobiles Endgerät ist.

## Revendications

1. Procédé d'utilisation d'un fichier d'alerte sur un dispositif électronique, comprenant :
la détermination si un format audio du fichier d'alerte est dans une première catégorie comprenant au moins un format audio de complexité supérieure ou est dans une seconde catégorie comprenant au moins un format audio de complexité inférieure ;
la conversion du format audio du fichier d'alerte en au moins un format parmi le(s) format(s)s audio de complexité inférieure sur la base d'une quantité de mémoire libre sur le dispositif électronique si le format audio du fichier d'alerte est dans la première catégorie ;
l'enregistrement du fichier d'alerte avec le format audio converti sur le dispositif électronique ;
l'association du fichier d'alerte et du fichier d'alerte converti à un événement d'alerte ;
la réception de l'évènement d'alerte ;
la sélection d'un fichier parmi le fichier d'alerte et le fichier d'alerte converti sur la base d'un mode de fonctionnement du dispositif électronique en réponse à la réception de l'évènement d'alerte ; et
le mélange de la partie audio générée à partir du fichier sélectionné parmi le fichier d'alerte et le fichier d'alerte converti avec une autre partie audio non associée à l'évènement d'alerte.

2. Procédé selon la revendication 1, comprenant en outre :
la réception d'une sélection de l'utilisateur du fichier d'alerte avant la détermination si le format audio du fichier d'alerte est dans la première catégorie ou la seconde catégorie.

3. Procédé selon la revendication 1, dans lequel le dispositif électronique est un terminal mobile.

4. Dispositif électronique, comprenant :
un gestionnaire de fichier d'alerte qui est configuré pour déterminer si un format audio du fichier d'alerte est dans une première catégorie comprenant au moins un format audio de complexité supérieure ou est dans une seconde catégorie comprenant au moins un format audio de complexité inférieure, pour convertir le format audio du fichier d'alerte en un format parmi le(s) format(s) audio de complexité inférieure sur la base d'une quantité de mémoire libre sur le dispositif électronique si le format audio du fichier d'alerte est dans la première catégorie, et pour enregistrer le fichier d'alerte avec le format audio converti sur le dispositif électronique, pour associer le fichier d'alerte et le fichier d'alerte converti à un évènement d'alerte, pour recevoir l'évènement d'alerte, pour sélectionner un fichier parmi le fichier d'alerte et le fichier d'alerte converti sur la base d'un mode de fonctionnement du dispositif électronique en réponse à la réception de l'évènement d'alerte, et pour mélanger les parties audio générées à partir du fichier sélectionné parmi le fichier d'alerte et le fichier d'alerte converti avec une autre partie audio non associée à l'évènement d'alerte.

5. Dispositif électronique selon la revendication 4, dans lequel le gestionnaire de fichier d'alerte est en outre configuré pour recevoir une sélection de l'utilisateur du fichier d'alerte avant la détermination si le format audio du fichier d'alerte est dans la première catégorie ou la seconde catégorie.

6. Dispositif électronique selon la revendication 4, dans lequel le dispositif électronique est un terminal mobile.
